# EUROPEAN PATENT APPLICATION

(11) **EP 4 726 798 A2**
(43) Date of publication of application: **15.04.2026**
(21) Application number: 25226710.9
(22) Date of filing: 23.12.2025
(51) Int. Cl.: H01M 4/13

(54) **NEGATIVE ELECTRODE ACTIVE MATERIAL, SECONDARY BATTERY, AND ELECTRONIC APPARATUS**

(30) Priority: 25.12.2024 CN 202411930177
(71) Applicant: Ningde Amperex Technology Limited, Ningde, Fujian 352100 (CN)
(72) Inventor: SHAO, Wenlong, Ningde City, Fujian Province, 352100 (CN); ZHAO, Meiqi, Ningde City, Fujian Province, 352100 (CN); YI, Zheng, Ningde City, Fujian Province, 352100 (CN); XIE, Yuansen, Ningde City, Fujian Province, 352100 (CN)
(74) Representative: Kraus & Lederer PartGmbB

(57) **Abstract**

A negative electrode active material is granular, and the negative electrode active material includes first particles and second particles, where a sphericity of the first particles is greater than a sphericity of the second particles, the sphericity of the first particles is 0.6 to 1.0, and a particle size Dᵥ50 of the first particles is smaller than a particle size Dᵥ50 of the second particles. Applying the negative electrode active material of this application to a secondary battery can increase a compacted density of a battery electrode plate, thereby increasing the energy density of the secondary battery while improving the cycling performance of the secondary battery.

## Description

### TECHNICAL FIELD

This application relates to the field of electrochemical technology, and in particular, to a negative electrode active material, a secondary battery, and an electronic apparatus.

### BACKGROUND

The negative electrode active material serves as a carrier for lithium ions and electrons during charging and discharging of a battery, which accounts for 5% to 15% of battery costs and is one of the four main materials in a battery system. With social development, the demand for secondary batteries with high energy density, long cycle life, and low self-discharge rate has become increasingly significant. Graphite, as the most commonly used negative electrode material for lithium-ion batteries, has reached its capacity limit, necessitating the urgent development of a high-capacity negative electrode material to meet the increasing performance requirements.

Among the various negative electrode active materials under development, hard carbon materials have garnered significant attention due to their high theoretical capacity, low volume expansion, and capability for fast charging and discharging. However, hard carbon materials still face challenges such as low gram capacity, low initial Coulombic efficiency, and high charge-discharge potential. Additionally, hard carbon materials with a single morphology encounter issues such as low compacted density and poor electrode adhesion, affecting the capacity and cycling performance of battery cells.

### SUMMARY

The purpose of this application is to provide a negative electrode active material, a secondary battery, and an electronic apparatus to increase the energy density of the secondary battery. The specific technical solution is as follows.

According to a first aspect of this application, a negative electrode active material is provided, where the negative electrode active material is granular, and the negative electrode active material includes first particles and second particles. A sphericity of the first particles is greater than a sphericity of the second particles, the sphericity of the first particles is 0.6 to 1.0, and a particle size Dᵥ50 of the first particles is smaller than a particle size Dᵥ50 of the second particles.

The negative electrode active material provided by this application is granular and includes first particles and second particles. The negative electrode active material with the above characteristics avoids the issue of poor adhesion due to point contact between negative electrode active material particles when only first particles are present. In addition, in the negative electrode active material provided by this application, the first particles are uniformly distributed among the second particles. The first particles, with higher sphericity and smaller particle size, can slide during cold pressing of an electrode plate, relieving cold-pressing stress and avoiding hard contact between particles, thereby preventing stress concentration. This effectively addresses the issue of breakage of large particles during cold pressing, avoids exposing more new surfaces of the negative electrode material after cold pressing, further prevents electrolyte loss, increases the energy density and improves the cycling performance of a battery cell. Additionally, the compacted density of a negative electrode plate including the above negative electrode active material is improved as well, and a negative electrode binder can better encapsulate the first particles. A contact area between a cut surface of the first particle and an irregular surface of the second particle is larger, which can effectively promote lithium-ion transport between negative electrode active material particles. In addition, by regulating the sphericity and particle size of the first particles and second particles in the negative electrode active material, the first particles and second particles can be bonded to each other well, enabling good contact between the particles in the negative electrode active material. Applying the negative electrode active material of this application to a secondary battery can increase the compacted density of the battery electrode plate, thereby increasing the energy density of the secondary battery while improving the cycling performance of the secondary battery.

In some embodiments of this application, the sphericity of the first particles is 0.7 to 1.0.

In some embodiments of this application, the sphericity of the second particles is 0.1 to 0.6; or, the sphericity of the second particles is 0.2 to 0.6.

In some embodiments of this application, a ratio of the sphericity of the first particles to the sphericity of the second particles ranges from 1.1 to 10.0; or, the ratio of the sphericity of the first particles to the sphericity of the second particles ranges from 1.1 to 5.5.

By regulating the sphericity parameters of the first particles and second particles in the negative electrode active material within the above ranges, the negative electrode active material particles can slide during cold pressing of the electrode plate, relieving cold-pressing stress and avoiding hard contact between the particles, thereby preventing stress concentration and avoiding exposing more new surfaces of the negative electrode material after cold pressing, as well as avoiding further electrolyte loss. Additionally, the particles in the negative electrode active material have further improved contact, which can effectively promote lithium-ion transport between negative electrode active material particles. If the sphericity parameter of the first particles exceeds the above ranges, for example, being below the above ranges, it may lead to stress concentration between the first particles and second particles, making the particles prone to crushing during cold pressing, thereby reducing the initial efficiency and energy density. If the sphericity parameter of the first particles is beyond the above ranges, it may lead to reduced contact area between the first particles and second particles, resulting in poor binder adhesion, particle detachment during cycling, and reduced cycling retention rate. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, a range of the particle size Dᵥ50 of the first particles satisfies 1 µm ≤ Dᵥ50 ≤ 10 µm; or, the range of the particle size Dᵥ50 of the first particles satisfies 3 µm ≤ Dᵥ50 ≤ 8 µm.

In some embodiments of this application, the range of the particle size of the second particles satisfies 1.5 µm ≤ Dᵥ50 ≤ 20 µm; or, the range of the particle size Dᵥ50 of the second particles satisfies 8 µm ≤ Dᵥ50 ≤ 20 µm.

In some embodiments of this application, a ratio of the particle size Dᵥ50 of the first particles to the particle size Dᵥ50 of the second particles ranges from 0.05 to 0.9; or, the ratio of the particle size Dᵥ50 of the first particles to the particle size Dᵥ50 of the second particles ranges from 0.1 to 0.9.

In some embodiments of this application, regulating the particle sizes of the first particles and second particles in the negative electrode active material within the above ranges enables further improved contact between the negative electrode active material particles. If the particle size parameter of the first particles exceeds the above ranges, for example, being below the above ranges, it may lead to poor binder adhesion, poor contact between small particles, and reduced lithium-ion transport efficiency. If the particle size parameter of the first particles is beyond the above ranges, it may lead to decreased particle strength, making the particles prone to crushing during cold pressing, exposing new active surfaces, and reducing the initial efficiency and cycling performance of the battery. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, the first particles include a hard carbon material.

In some embodiments of this application, the second particles include a hard carbon material.

In some embodiments of this application, the first particles and second particles further include a first element and a second element, where the first element includes any one of Li, Na, K, Rb, Mg, Ca, or Zn, and the second element is N element.

By regulating the first particles and second particles in the negative electrode active material to include the above first element and second element, the first element can induce storage of active metal ions in the negative electrode active material, further increasing the storage capacity for active metal ions; and the second element helps to expand a carbon interlayer spacing of the negative electrode active material, promoting the intercalation and deintercalation of active metal ions within the active material, and enabling the negative electrode active material to have a high reversible capacity.

In some embodiments of this application, based on a total mass of the negative electrode active material, a percentage of the first element relative to the total mass of the negative electrode active material is 0.01% to 1%.

In some embodiments of this application, based on a total mass of the first particles, a percentage of the first element in the first particles is A1, and based on a total mass of the second particles, and a percentage of the first element in the second particles is A2, where A2/A1 satisfies the following relationship: 0.8 ≤ A2/A1 ≤ 1.2; and/or, the percentage A1 of the first element in the first particles ranges from 0.01% to 0.9%; and/or, the percentage A2 of the first element in the second particles ranges from 0.01% to 0.9%.

In some embodiments of this application, based on the total mass of the negative electrode active material, a percentage of the second element relative to the total mass of the negative electrode active material is 0.01% to 3%.

In some embodiments of this application, based on the total mass of the first particles, a percentage of the second element in the first particles is B1, and a percentage of the second element in the second particles is B2, where B2/B1 satisfies the following relationship: 0.8 ≤ B2/B1 ≤ 1.2; and/or, the percentage B1 of the second element in the first particles ranges from 0.06% to 2.8%; and/or, the percentage B2 of the second element in the second particles ranges from 0.05% to 3%.

In some embodiments of this application, regulating the percentages of the first element in the first particles and second particles of the negative electrode active material within the above ranges can further induce the storage of active metal ions in the negative electrode active material, further increasing the storage capacity for active metal ions. Applying the negative electrode active material of this application to a secondary battery can increase the gram capacity of the battery negative electrode, thereby increasing the energy density of the secondary battery. In some embodiments of this application, regulating the percentage of the N element in the first particles and second particles of the active material within the above ranges helps to further expand the carbon interlayer spacing of the negative electrode active material, further promote the intercalation and deintercalation of active metal ions within the active material, and further enable the negative electrode active material to have a high reversible capacity.

In some embodiments of this application, a ratio of a closed-pore volume of the first particles to a closed-pore volume of the second particles is 0.75 to 1.0.

In some embodiments of this application, the closed-pore volume of the first particles ranges from 0.05 cc/g to 0.4 cc/g; or, the closed-pore volume of the first particles ranges from 0.12 cc/g to 0.36 cc/g.

In some embodiments of this application, the closed-pore volume of the second particles ranges from 0.06 cc/g to 0.4 cc/g; or, the closed-pore volume of the second particles ranges from 0.06 cc/g to 0.34 cc/g.

In some embodiments of this application, regulating the closed-pore volumes of the first particles and second particles in the negative electrode active material within the above ranges can increase the storage capacity for active metal ions while enabling the active material to have a low energy storage platform, thereby increasing the storage capacity for active metal ions. Regulating the ratio of the closed-pore volume of the first particles to the closed-pore volume of the second particles in the active material within the above ranges can avoid capacity differences between the particles and prevent the precipitation of active metal ions in an atomic form during full charge.

In some embodiments of this application, a surface of the first particles and a surface of the second particles have a carbon coating layer, and a thickness of the carbon coating layer is 20 nm to 200 nm.

In some embodiments of this application, a mass ratio of the first particles to the second particles is 0.6 to 3.0.

In some embodiments of this application, a ratio of an ID/IG value of the first particles to an ID/IG value of the second particles ranges from 0.93 to 1.12; and/or, the ID/IG of the first particles ranges from 1.0 to 1.3; and/or, the ID/IG of the second particles ranges from 1.0 to 1.3.

In some embodiments of this application, a strength of the first particles and a strength of the second particles are tested using a nanoindentation method, and a particle strength ratio of the first particles to the second particles ranges from 1.1 to 2.8; or, the strength of the first particles ranges from 0.1 GPa to 6 GPa; or, the strength of the second particles ranges from 0.1 GPa to 6 GPa.

In some embodiments of this application, in the negative electrode active material provided by this application, the surface of the first particles and the surface of the second particles have a carbon coating layer, and controlling the thickness of the carbon coating layer within the above range helps to reduce surface defects of the particles, also reduce exposure of pore structures of the particles, improve the initial Coulombic efficiency of the negative electrode active material, and enable the negative electrode active material to have a high reversible capacity, thereby increasing the energy density and cycling stability of the secondary battery.

In some embodiments of this application, regulating the mass ratio of the first particles to the second particles in the negative electrode active material within the above range can enable good contact between the negative electrode active material particles. Applying the negative electrode active material of this application to a secondary battery can increase the compacted density of the battery electrode plate, thereby increasing the energy density of the secondary battery while improving the cycling performance of the secondary battery.

In some embodiments of this application, ID is a peak area of peak D in a Raman spectrum of the material, and IG is a peak area of peak G in the Raman spectrum of the material. The ID/IG value of the first particles and the ID/IG value of the second particles of the negative electrode active material provided by this application are controlled within the above ranges, indicating that the negative electrode active material provided has an appropriate degree of defects, which can promote ion adsorption and binding while reducing irreversible capacity loss due to a high degree of defects, thereby facilitating an increase in the gram capacity of the negative electrode active material.

In some embodiments of this application, regulating the particle strength ratio of the first particles to the second particles in the negative electrode active material provided by this application within the above range can ensure that the particle morphology of the negative electrode plate is maintained during cold pressing, thereby improving the initial Coulombic efficiency of the negative electrode active material and improving the cycling performance of the secondary battery.

According to a second aspect of this application, a negative electrode plate is further provided, where the negative electrode plate includes a negative electrode current collector and a negative electrode active material layer disposed on at least one surface of the negative electrode current collector, and the negative electrode active material layer includes any negative electrode active material according to the first aspect of this application. The negative electrode plate provided by the second aspect of this application has a high capacity, and applying it to a secondary battery can increase the energy density of the secondary battery while improving the cycling performance of the secondary battery.

In some embodiments of this application, a compacted density of the negative electrode active material layer ranges from 0.90 g/cc to 1.3 g/cc; or, the compacted density of the negative electrode active material layer ranges from 0.9 g/cc to 1.25 g/cc.

In some embodiments of this application, the negative electrode plate is used as a working electrode and lithium metal is used as a counter electrode to form a half-battery through assembly. A charge-discharge test is performed in a range of 0 V to 2.5 V vs Li⁺/Li. Based on a charge-discharge curve obtained from the charge-discharge test, a total gram capacity at 0 V to 0.20 V (vs Li⁺/Li) is denoted as C10 mAh/g, a gram capacity at 0 V to 0.20 V (vs Li⁺/Li) is denoted as C11 mAh/g, and a gram capacity at 0.2 V to 2.5 V (vs Li⁺/Li) is denoted as C12 mAh/g, where the negative electrode active material satisfies: 600 ≤ C10 ≤ 850, and 300 ≤ C11 ≤ 590; and/or, 0.4 ≤ C12/C11 ≤ 1.2.

In some embodiments of this application, the compacted density of the negative electrode active material layer ranges from 0.90 g/cc to 1.3 g/cc. Preferably, the compacted density of the negative electrode active material layer ranges from 0.95 g/cc to 1.20 g/cc. By regulating the compacted density of the negative electrode active material layer within the above ranges, a percentage of the negative electrode active material per unit area can be increased, thereby increasing the energy density of the secondary battery.

In some embodiments of this application, the negative electrode plate is used as a working electrode and lithium metal is used as a counter electrode to form a half-battery through assembly. A charge-discharge test is performed in a range of 0 V to 2.5 V vs Li⁺/Li. Based on a charge-discharge curve obtained from the charge-discharge test, a total gram capacity at 0 V to 0.20 V (vs Li⁺/Li) is denoted as C10 mAh/g, a gram capacity at 0 V to 0.20 V (vs Li⁺/Li) is denoted as C11 mAh/g, and a gram capacity at 0.2 V to 2.5 V (vs Li⁺/Li) is denoted as C12 mAh/g, where the negative electrode active material satisfies: 600 ≤ C10 ≤ 850, and 300 ≤ C11 ≤ 590; and/or, 0.4 ≤ C12/C11 ≤ 1.2. By regulating the corresponding C10, C11, and C12 of the negative electrode active material within the above ranges, the negative electrode active material layer can have a high total lithium storage gram capacity and a low average lithium deintercalation potential. Using the negative electrode active material layer with the above characteristics as a negative electrode of a lithium-ion battery is conducive to further increasing the energy density of the lithium-ion battery.

According to a third aspect of this application, a secondary battery is provided, including a positive electrode plate, an electrolyte, and the negative electrode plate provided in any one of the embodiments according to the second aspect of this application. The secondary battery including the above negative electrode plate has high energy density and good cycling performance.

According to a fourth aspect of this application, an electronic apparatus is provided, including the secondary battery provided in any one of the embodiments according to the third aspect of this application. The electronic apparatus including the above secondary battery has a long service life.

### BRIEF DESCRIPTION OF DRAWINGS

To more clearly illustrate the technical solutions in the embodiments of this application or in the prior art, the drawings required for use in the description of the embodiments or prior art are briefly introduced below. It is apparent that the drawings described below are only some embodiments of this application, and other embodiments can still be obtained by those of ordinary skill in the art based on these drawings.
FIG. 1 is a scanning electron microscope image of a negative electrode active material prepared in Example 1-5, where "1" denotes first particles, corresponding to a type of particles with a smaller particle size and a higher sphericity in FIG. 1, and "2" denotes second particles, corresponding to a type of particles with a larger particle size and a lower sphericity;
FIG. 2 is a charge-discharge curve of a negative electrode active material in Comparative Example 1 in a potential range of 0 V to 2.5 V vs Li/Li⁺;
FIG. 3 is a charge-discharge curve of a negative electrode active material in Example 1-5 in a potential range of 0 V to 2.5 V vs Li/Li⁺; and
FIG. 4 is a charge-discharge curve of a negative electrode active material in Example 2-4 in a potential range of 0 V to 2.5 V vs Li/Li⁺.

### DETAILED DESCRIPTION

The technical solutions in the embodiments of this application are clearly and completely described below with reference to the drawings in the embodiments of this application. It is apparent that the described embodiments are only some rather than all of the embodiments of this application. Based on the embodiments in this application, all other embodiments obtained by those of ordinary skill in the art based on this application fall within the protection scope of this application.

It should be noted that in the specific embodiments of this application, a lithium-ion battery is used as an example of a secondary battery to explain this application, but the secondary battery of this application is not limited to lithium-ion batteries.

Among the various negative electrode active materials under development, hard carbon materials have garnered significant attention due to their high theoretical capacity, low volume expansion, and capability for fast charging and discharging. However, hard carbon materials still face challenges such as low gram capacity, low initial Coulombic efficiency, and high charge-discharge potential. Additionally, hard carbon materials with a single morphology encounter issues such as low compacted density and poor electrode adhesion, affecting the capacity and cycling performance of the battery cell.

Based on this, the inventors of this application, starting from the negative electrode active material itself, have found through extensive research that by preparing a negative electrode active material with high gram capacity while controlling a particle morphology of the negative electrode active material, the issues of poor adhesion and poor conductivity of negative electrode plates can be addressed, thereby increasing the compacted density of battery electrode plates and further increasing the energy density of the secondary battery while improving the cycling performance of the secondary battery.

According to a first aspect of this application, a negative electrode active material is provided, where the negative electrode active material is granular, and the negative electrode active material includes first particles and second particles. A sphericity of the first particles is greater than a sphericity of the second particles, the sphericity of the first particles is 0.6 to 1.0, and a particle size Dᵥ50 of the first particles is smaller than a particle size Dᵥ50 of the second particles. The particle size Dᵥ50 of the first particles refers to a particle size at which the cumulative volume reaches 50%, measured from the smaller particle size side in the volume-based particle size distribution of the first particles, and the particle size Dᵥ50 of the second particles refers to a particle size at which the cumulative volume reaches 50%, measured from the smaller particle size side in the volume-based particle size distribution of the second particles.

The negative electrode active material provided by this application is granular and includes first particles and second particles. The negative electrode active material with the above characteristics avoids the issue of poor adhesion due to point contact between negative electrode active material particles when only first particles are present. In addition, in the negative electrode active material provided by this application, the first particles are uniformly distributed among the second particles. The first particles, with higher sphericity and smaller particle size, can slide during cold pressing of an electrode plate, relieving cold-pressing stress and avoiding hard contact between particles, thereby preventing stress concentration. This effectively addresses the issue of breakage of large particles during cold pressing, avoids exposing more new surfaces of the negative electrode material after cold pressing, further prevents electrolyte loss, increases the energy density and improves the cycling performance of a battery cell. Additionally, the compacted density of a negative electrode plate including the above negative electrode active material is improved as well, and a negative electrode binder can better encapsulate the first particles. A contact area between a cut surface of the first particle and an irregular surface of the second particle is larger, which can effectively promote lithium-ion transport between negative electrode active material particles. In addition, by regulating the sphericities and particle sizes of the first particles and second particles in the negative electrode active material, the first particles and second particles can be bonded to each other well, enabling good contact between the particles in the negative electrode active material. Applying the negative electrode active material of this application to a secondary battery can increase the compacted density of the battery electrode plate, thereby increasing the energy density of the secondary battery while improving the cycling performance of the secondary battery.

In some embodiments of this application, the sphericity of the first particles is 0.7 to 1.0.

In some embodiments of this application, the sphericity of the second particles is 0.1 to 0.6; or, the sphericity of the second particles is 0.2 to 0.6.

In some embodiments of this application, a ratio of the sphericity of the first particles to the sphericity of the second particles ranges from 1.1 to 10.0; or, the ratio of the sphericity of the first particles to the sphericity of the second particles ranges from 1.1 to 5.5.

In some embodiments of this application, in the negative electrode active material provided, the sphericity of the first particles is 0.6 to 1.0. Specifically, the sphericity of the first particles may be 0.6, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.9, 0.91, 0.92, 0.93, 0.94, 0.95, 0.96, 0.97, 0.98, 0.99, 1.0, or a range defined by any two of these values. Preferably, the sphericity of the first particles may be 0.7 to 1.0. Regulating the sphericity parameter of the first particles in the negative electrode active material within the above range, enables further improved contact between the negative electrode active material particles. If the sphericity parameter of the first particles exceeds the above ranges, for example, being below the above ranges, it may lead to stress concentration between the first particles and second particles, making the particles prone to crushing during cold pressing, thereby reducing the initial efficiency and energy density. If the sphericity parameter of the first particles is beyond the above ranges, it may lead to reduced contact area between the first particles and second particles, resulting in poor binder adhesion, particle detachment during cycling, and reduced cycling retention rate. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, in the negative electrode active material provided, the sphericity of the second particles is 0.1 to 0.6. Specifically, the sphericity of the second particles may be 0.1, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.6, or a range defined by any two of these values. Preferably, the sphericity of the second particles may be 0.2 to 0.6. Regulating the sphericity parameter of the second particles in the negative electrode active material within the above ranges enables further improved contact between the negative electrode active material particles. If the sphericity parameter of the second particles exceeds the above ranges, for example, being below the above ranges, it may cause formation of obvious sharp edges on the particles, so that electrons and lithium ions are likely to deposit on a negative electrode, which leads to lithium precipitation and causes the separator to be pierced easily, resulting in battery cell failure. If the sphericity parameter of the second particles is beyond the above ranges, it may lead to reduced contact area between the first particles and second particles, resulting in poor binder adhesion, particle detachment during cycling, and reduced cycling retention rate. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, in the negative electrode active material provided, the ratio of the sphericity of the first particles to the sphericity of the second particles ranges from 1.1 to 10.0. Specifically, the ratio of the sphericity of the first particles to the sphericity of the second particles may be 1.1, 1.2, 1.3, 1.4, 1.5, 1.6, 1.7, 1.8, 1.9, 2.0, 2.1, 2.2, 2.3, 2.4, 2.5, 2.6, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, or a range defined by any two of these values. Preferably, the ratio of the sphericity of the first particles to the sphericity of the second particles may range from 1.1 to 5.5. Regulating the ratio parameter of the sphericity of the first particles to the sphericity of the second particles in the negative electrode active material within the above ranges enables further improved contact between the negative electrode active material particles. If the ratio of the sphericity of the first particles to the sphericity of the second particles exceeds the above ranges, for example, being below the above ranges, it may lead to stress concentration between the first particles and second particles, making the particles prone to crushing during cold pressing, thereby reducing the initial efficiency and energy density. If the ratio is beyond the above ranges, it may lead to poor adhesion and contact between the particles, hindering lithium-ion diffusion. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, a range of the particle size Dᵥ50 of the first particles satisfied 1 µm ≤ Dᵥ50 ≤ 10 µm; or, the range of the particle size Dᵥ50 of the first particles satisfies 3 µm ≤ Dᵥ50 ≤ 8 µm.

In some embodiments of this application, the range of the particle size Dᵥ50 of the second particles satisfies 1.5 µm ≤ Dᵥ50 ≤ 20 µm; or, the range of the particle size Dᵥ50 of the second particles satisfies 8 µm ≤ Dᵥ50 ≤ 20 µm.

In some embodiments of this application, a ratio of the particle size Dᵥ50 of the first particles to the particle size Dᵥ50 of the second particles ranges from 0.05 to 0.9; or, the ratio of the particle size Dᵥ50 of the first particles to the particle size Dᵥ50 of the second particles ranges from 0.1 to 0.9.

In some embodiments of this application, in the negative electrode active material provided, the range of the particle size Dᵥ50 of the first particles satisfies 1 µm ≤ Dᵥ50 ≤ 10 µm, where the particle size Dᵥ50 of the first particles refers to a particle size at which the cumulative volume reaches 50%, measured from the smaller particle size side in the volume-based particle size distribution of the first particles. Specifically, the particle size Dᵥ50 of the first particles may be 1 µm, 1.5 µm, 2.0 µm, 2.5 µm, 3.0 µm, 3.5 µm, 4.0 µm, 4.5 µm, 5.0 µm, 5.5 µm, 6.0 µm, 6.5 µm, 7.0 µm, 7.5 µm, 8.0 µm, 8.5 µm, 8.6 µm, 8.7 µm, 8.8 µm, 8.9 µm, 9.0 µm, 9.5 µm, 10.0 µm, or a range defined by any two of these values. Preferably, the range of the particle size Dᵥ50 of the first particles may satisfy 3 µm ≤ Dᵥ50 ≤ 8 µm. In some embodiments of this application, regulating the particle size Dᵥ50 of the first particles in the negative electrode active material within the above ranges enables further improved contact between the negative electrode active material particles. If the particle size parameter of the first particles exceeds the above ranges, for example, being below the above ranges, it may lead to poor binder adhesion, poor contact between small particles, and reduced lithium-ion transport efficiency. If the particle size parameter of the first particles is beyond the above ranges, it may lead to decreased particle strength, making the particles prone to crushing during cold pressing, exposing new active surfaces, and reducing the initial efficiency and cycling performance of the battery. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, in the negative electrode active material provided, the range of the particle size Dᵥ50 of the second particles satisfies 1.5 µm ≤ Dᵥ50 ≤ 20 µm, where the particle size Dᵥ50 of the second particles refers to a particle size at which the cumulative volume reaches 50%, measured from the smaller particle size side in the volume-based particle size distribution of the second particles. Specifically, the particle size Dᵥ50 of the second particles may be 1.5 µm, 2.0 µm, 2.5 µm, 3.0 µm, 3.5 µm, 4.0 µm, 4.5 µm, 5.0 µm, 5.5 µm, 6.0 µm, 6.5 µm, 7.0 µm, 7.5 µm, 8.0 µm, 8.5 µm, 9.0 µm, 9.5 µm, 10.0 µm, 10.5 µm, 11.0 µm, 11.5 µm, 12.0 µm, 12.5 µm, 13.0 µm, 13.5 µm, 14.0 µm, 14.5 µm, 15.0 µm, 15.5 µm, 16.0 µm, 16.5 µm, 17.0 µm, 17.5 µm, 18.0 µm, 18.5 µm, 19.5 µm, 20 µm, or a range defined by any two of these values. Preferably, the range of the particle size Dᵥ50 of the second particles satisfies 8 µm ≤ Dᵥ50 ≤ 20 µm. In some embodiments of this application, regulating the particle size Dᵥ50 of the second particles in the negative electrode active material within the above ranges enables further improved contact between the negative electrode active material particles. If the particle size parameter of the second particles exceeds the above ranges, for example, being below the above ranges, it may lead to poor binder adhesion, poor contact between small particles, and reduced lithium-ion transport efficiency. If the particle size parameter of the second particles is beyond the above ranges, it may lead to decreased particle strength, making the particles prone to crushing during cold pressing, exposing new active surfaces, and reducing the initial efficiency and cycling performance of the battery. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, in the negative electrode active material provided, a ratio of the particle size Dᵥ50 of the first particles to the particle size Dᵥ50 of the second particles ranges from 0.05 to 0.9. Specifically, the ratio of the particle size Dᵥ50 of the first particles to the particle size Dᵥ50 of the second particles may be 0.005, 0.01, 0.02, 0.03, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, 0.55, 0.6, 0.65, 0.7, 0.75, 0.8, 0.85, 0.9, or a range defined by any two of these values. Preferably, the ratio of the particle size Dᵥ50 of the first particles to the particle size Dᵥ50 of the second particles may range from 0.1 to 0.9. In some embodiments of this application, regulating the ratio of the particle size Dᵥ50 of the first particles to the particle size Dᵥ50 of the second particles in the negative electrode active material within the above ranges enables further improved contact between the negative electrode active material particles. If the ratio parameter of the particle size Dᵥ50 of the first particles to the particle size Dᵥ50 of the second particles exceeds the above ranges, for example, being below the above ranges, it may lead to poor binder adhesion, poor contact between small particles, and reduced lithium-ion transport efficiency. If the ratio is beyond the above ranges, it may lead to stress concentration on cut surfaces of the first particles due to sharp edges of the second particles, making the particles prone to crushing during cold pressing, exposing new active surfaces, and reducing the initial efficiency and cycling performance of the battery. Applying the negative electrode active material with the above characteristics to a secondary battery can further increase the compacted density of the battery electrode plate, thereby further increasing the energy density of the secondary battery while improving the cycling performance of the secondary battery.

In some embodiments of this application, the first particles include a hard carbon material.

In some embodiments of this application, the second particles include a hard carbon material.

In some embodiments of this application, the first particles and second particles further include a first element and a second element, where the first element includes any one of Li, Na, K, Rb, Mg, Ca, or Zn, and the second element is N element. The first element can induce the storage of active metal ions in the negative electrode active material, further increasing the storage capacity for active metal ions; and the second element helps to expand the carbon interlayer spacing of the negative electrode active material, promoting the intercalation and deintercalation of active metal ions within the active material, and enabling the negative electrode active material to have a high reversible capacity.

In some embodiments of this application, based on a total mass of the negative electrode active material, a percentage of the first element relative to the total mass of the negative electrode active material is 0.01% to 1%.

In some embodiments of this application, based on a total mass of the first particles, a percentage of the first element in the first particles is A1, and based a the total mass of the second particles, a percentage of the first element in the second particles is A2, where A2/A1 satisfies the following relationship: 0.8 ≤ A2/A1 ≤ 1.2; and/or, the percentage A1 of the first element in the first particles ranges from 0.01% to 0.9%; and/or, the percentage A2 of the first element in the second particles ranges from 0.01% to 0.9%.

In some embodiments of this application, based on the total mass of the negative electrode active material, a percentage of the second element relative to the total mass of the negative electrode active material is 0.01% to 3%.

In some embodiments of this application, based on the total mass of the first particles, a percentage of the second element in the first particles is B1, and a percentage of the second element in the second particles is B2, where B2/B1 satisfies the following relationship: 0.8 ≤ B2/B1 ≤ 1.2; and/or, the percentage B1 of the second element in the first particles ranges from 0.06% to 2.8%; and/or, the percentage B2 of the second element in the second particles ranges from 0.05% to 3%.

In some embodiments of this application, in the negative electrode active material provided, based on the total mass of the negative electrode active material, the percentage of the first element relative to the total mass of the negative electrode active material ranges from 0.01% to 1%. Specifically, the percentage of the first element relative to the total mass of the negative electrode active material may be 0.01%, 0.02%, 0.03%, 0.04%, 0.05%, 0.06%, 0.07%, 0.08%, 0.09%, 0.1%, 0.15%, 0.2%, 0.25%, 0.3%, 0.35%, 0.40%, 0.45%, 0.50%, 0.55%, 0.60%, 0.65%, 0.70%, 0.75%, 0.80%, 0.85%, 0.90%, 0.95%, 1%, or a range defined by any two of these values. In some embodiments of this application, regulating the percentage of the first element in the negative electrode active material within the above ranges can further induce the storage of active metal ions in the negative electrode active material, further increasing the storage capacity for active metal ions. Applying the negative electrode active material of this application to a secondary battery can increase the gram capacity of the battery negative electrode, thereby increasing the energy density of the secondary battery.

In some embodiments of this application, in the negative electrode active material provided, based on the total mass of the first particles, the percentage of the first element in the first particles is A1, and based on the total mass of the second particles, the percentage of the first element in the second particles is A2, where A2/A1 satisfies the following relationship: 0.8 ≤ A2/A1 ≤ 1.2. Specifically, the ratio A2/A1 of the percentage A2 of the first element in the second particles to the percentage A1 of the first element in the first particles may be 0.8, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.0, 1.1, 1.2, or a range defined by any two of these values. In some embodiments of this application, regulating the ratio A2/A1 of the percentage A2 of the first element in the second particles to the percentage A1 of the first element in the first particles within the above ranges can reduce differences between the particles, and enabling uniform storage of lithium ions in the entire negative electrode active material, thereby enhancing the cycling stability of the secondary battery.

In some embodiments of this application, in the negative electrode active material provided, the percentage A1 of the first element in the first particles ranges from 0.01% to 0.9%. Specifically, the percentage A1 of the first element in the first particles may be 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, or a range defined by any two of these values. In some embodiments of this application, regulating the percentage A1 of the first element in the first particles in the negative electrode active material within the above ranges can induce the storage of active metal ions in the negative electrode active material, further increasing the storage capacity for active metal ions. Applying the negative electrode active material of this application to a secondary battery can increase the gram capacity of the battery negative electrode, thereby increasing the energy density of the secondary battery.

In some embodiments of this application, in the negative electrode active material provided, the percentage A2 of the first element in the second particles ranges from 0.01% to 0.9%. Specifically, the percentage A2 of the first element in the second particles may be 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, or a range defined by any two of these values. In some embodiments of this application, regulating the percentage A2 of the first element in the second particles in the negative electrode active material within the above ranges can induce the storage of active metal ions in the negative electrode active material, further increasing the storage capacity for active metal ions. Applying the negative electrode active material of this application to a secondary battery can increase the gram capacity of the battery negative electrode, thereby increasing the energy density of the secondary battery.

In some embodiments of this application, in the negative electrode active material provided, based on the total mass of the negative electrode active material, the percentage of the second element relative to the total mass of the negative electrode active material is 0.01% to 3%. Specifically, based on the total mass of the negative electrode active material, the percentage of the second element relative to the total mass of the negative electrode active material may be 0.01%, 0.02%, 0.03%, 0.04%, 0.05%, 0.06%, 0.07%, 0.08%, 0.09%, 0.1%, 0.15%, 0.2%, 0.25%, 0.3%, 0.35%, 0.40%, 0.45%, 0.50%, 0.55%, 0.60%, 0.65%, 0.70%, 0.75%, 0.80%, 0.85%, 0.90%, 0.95%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, or a range defined by any two of these values. In some embodiments of this application, regulating the percentage of the N element in the negative electrode active material within the above ranges helps to further expand the carbon interlayer spacing of the negative electrode active material, further promote the intercalation and deintercalation of active metal ions within the active material, and further enable the negative electrode active material to have a high reversible capacity.

In some embodiments of this application, in the negative electrode active material provided, based on the total mass of the first particles, the percentage of the second element in the first particles is B1, and the percentage of the second element in the second particles is B2, where B2/B1 satisfies the following relationship: 0.8 ≤ B2/B1 ≤ 1.2. Specifically, the ratio B2/B1 of the percentage B2 of the second element in the second particles to the percentage B1 of the second element in the first particles may be 0.8, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.0, 1.1, 1.2, or a range defined by any two of these values. In some embodiments of this application, regulating the ratio B2/B1 of the percentage B2 of the second element in the second particles to the percentage B1 of the second element in the first particles within the above ranges can reduce differences between the particles, enabling uniform storage of lithium ions in the entire negative electrode active material, thereby enhancing the cycling stability of the secondary battery.

In some embodiments of this application, in the negative electrode active material provided, the percentage B1 of the second element in the first particles ranges from 0.06% to 2.8%. Specifically, the percentage B1 of the second element in the first particles may be 0.06%, 0.07%, 0.08%, 0.09%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, or a range defined by any two of these values. In some embodiments of this application, regulating the percentage B1 of the second element in the first particles in the negative electrode active material within the above ranges can help to expand the carbon interlayer spacing of the negative electrode active material, promote the intercalation and deintercalation of active metal ions within the active material, and enable the negative electrode active material to have a high reversible capacity while avoiding an increase in irreversible capacity due to excessively high B1.

In some embodiments of this application, in the negative electrode active material provided, the percentage B2 of the second element in the second particles ranges from 0.05% to 3%. Specifically, the percentage B2 of the second element in the second particles may be 0.05%, 0.06%, 0.07%, 0.08%, 0.09%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, or a range defined by any two of these values. In some embodiments of this application, regulating the percentage B2 of the second element in the second particles in the negative electrode active material within the above ranges can help to expand the carbon interlayer spacing of the negative electrode active material, promote the intercalation and deintercalation of active metal ions within the active material, and enable the negative electrode active material to have a high reversible capacity while avoiding an increase in irreversible capacity due to excessively high B2.

In some embodiments of this application, a ratio of a closed-pore volume of the first particles to a closed-pore volume of the second particles is 0.75 to 1.0.

In some embodiments of this application, the closed-pore volume of the first particles ranges from 0.05 cc/g to 0.4 cc/g; or, the closed-pore volume of the first particles ranges from 0.12 cc/g to 0.36 cc/g.

In some embodiments of this application, the closed-pore volume of the second particles ranges from 0.06 cc/g to 0.4 cc/g; or, the closed-pore volume of the second particles ranges from 0.06 cc/g to 0.34 cc/g.

In some embodiments of this application, in the negative electrode active material provided, the ratio of the closed-pore volume of the first particles to the closed-pore volume of the second particles ranges from 0.75 to 1.0. Specifically, the ratio of the closed-pore volume of the first particles to the closed-pore volume of the second particles may be 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, 1.0, or a range defined by any two of these values. In some embodiments of this application, regulating the ratio of the closed-pore volume of the first particles to the closed-pore volume of the second particles within the above ranges can increase the storage capacity for active metal ions while enabling the active material to have a low energy storage platform, thereby increasing the energy density of the battery. Regulating the ratio of the closed-pore volume of the first particles to the closed-pore volume of the second particles within the above ranges can avoid capacity differences between the particles and prevent the precipitation of active metal ions in an atomic form during full charge.

In some embodiments of this application, in the negative electrode active material provided, the closed-pore volume of the first particles ranges from 0.05 cc/g to 0.4 cc/g. Specifically, the closed-pore volume of the first particles may be 0.05 cc/g, 0.06 cc/g, 0.07 cc/g, 0.08 cc/g, 0.09 cc/g, 0.1 cc/g, 0.11 cc/g, 0.12 cc/g, 0.13 cc/g, 0.14 cc/g, 0.15 cc/g, 0.16 cc/g, 0.17 cc/g, 0.18 cc/g, 0.19 cc/g, 0.20 cc/g, 0.21 cc/g, 0.22 cc/g, 0.23 cc/g, 0.24 cc/g, 0.25 cc/g, 0.26 cc/g, 0.27 cc/g, 0.28 cc/g, 0.29 cc/g, 0.30 cc/g, 0.31 cc/g, 0.32 cc/g, 0.33 cc/g, 0.34 cc/g, 0.35 cc/g, 0.36 cc/g, 0.37 cc/g, 0.38 cc/g, 0.39 cc/g, 0.4 cc/g, or a range defined by any two of these values. Preferably, the closed-pore volume of the first particles may range from 0.12 cc/g to 0.36 cc/g. In some embodiments of this application, regulating the closed-pore volume of the first particles within the above ranges can increase the storage capacity for active metal ions while enabling the active material to have a low energy storage platform, thereby increasing the energy density of the battery. This also avoids the generation of ineffective closed pores and ensures that the particles have a specific strength, thereby preventing capacity reduction caused by particle crushing and breakage during cold pressing.

In some embodiments of this application, in the negative electrode active material provided, the closed-pore volume of the second particles ranges from 0.06 cc/g to 0.4 cc/g. Specifically, the closed-pore volume of the second particles may be 0.06 cc/g, 0.07 cc/g, 0.08 cc/g, 0.09 cc/g, 0.1 cc/g, 0.11 cc/g, 0.12 cc/g, 0.13 cc/g, 0.14 cc/g, 0.15 cc/g, 0.16 cc/g, 0.17 cc/g, 0.18 cc/g, 0.19 cc/g, 0.20 cc/g, 0.21 cc/g, 0.22 cc/g, 0.23 cc/g, 0.24 cc/g, 0.25 cc/g, 0.26 cc/g, 0.27 cc/g, 0.28 cc/g, 0.29 cc/g, 0.30 cc/g, 0.31 cc/g, 0.32 cc/g, 0.33 cc/g, 0.34 cc/g, 0.35 cc/g, 0.36 cc/g, 0.37 cc/g, 0.38 cc/g, 0.39 cc/g, 0.4 cc/g, or a range defined by any two of these values. Preferably, the closed-pore volume of the second particles may be 0.06 cc/g to 0.34 cc/g. In some embodiments of this application, regulating the closed-pore volume of the second particles within the above ranges can increase the storage capacity for active metal ions while enabling the active material to have a low energy storage platform, thereby increasing the energy density of the battery. This also avoids the generation of ineffective closed pores and ensures that the particles have a specific strength, thereby preventing capacity reduction caused by particle crushing and breakage during cold pressing.

In some embodiments of this application, a surface of the first particles and a surface of the second particles have a carbon coating layer, and a thickness of the carbon coating layer is 20 nm to 200 nm.

In some embodiments of this application, a mass ratio of the first particles to the second particles is 0.6 to 3.0.

In some embodiments of this application, a ratio of an ID/IG value of the first particles to an ID/IG value of the second particles ranges from 0.93 to 1.12; and/or, the ID/IG of the first particles ranges from 1.0 to 1.3; and/or, the ID/IG of the second particles ranges from 1.0 to 1.3.

A strength of the first particles and a strength of the second particles are tested using a nanoindentation method, and a ratio of the strength of the first particles to the strength of the second particles ranges from 1.1 to 2.8; or, the strength of the first particles ranges from 0.1 GPa to 6 GPa; or, the strength of the second particles ranges from 0.1 GPa to 6 GPa.

In some embodiments of this application, in the negative electrode active material provided, the surface of the first particles and the surface of the second particles have a carbon coating layer, and the thickness of the carbon coating layer is 20 nm to 200 nm. Specifically, the thickness of the carbon coating layer may be 20 nm, 21 nm, 22 nm, 23 nm, 24 nm, 25 nm, 26 nm, 27 nm, 28 nm, 29 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 105 nm, 110 nm, 115 nm, 120 nm, 125 nm, 130 nm, 135 nm, 140 nm, 145 nm, 150 nm, 155 nm, 160 nm, 165 nm, 170 nm, 175 nm, 180 nm, 185 nm, 190 nm, 195 nm, 200 nm, or a range defined by any two of these values. In some embodiments of this application, in the negative electrode active material provided by this application, the surface of the first particles and the surface of the second particles have a carbon coating layer, and controlling the thickness of the carbon coating layer within the above ranges helps to reduce surface defects of the particles, reduce exposure of pore structures of the particles, improve the initial Coulombic efficiency of the negative electrode active material, and enable the negative electrode active material to have a high reversible capacity, thereby increasing the energy density and cycling stability of the secondary battery.

In some embodiments of this application, in the negative electrode active material provided, the mass ratio of the first particles to the second particles is 0.6 to 3.0. Specifically, the mass ratio of the first particles to the second particles may be 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, or a range defined by any two of these values. In some embodiments of this application, regulating the mass ratio of the first particles to the second particles in the negative electrode active material within the above ranges enables good contact between the negative electrode active material particles. Applying the negative electrode active material of this application to a secondary battery can increase the compacted density of the battery electrode plate, thereby increasing the energy density of the secondary battery while improving the cycling performance of the secondary battery.

In some embodiments of this application, in the negative electrode active material provided, the ratio of the ID/IG value of the first particles to the ID/IG value of the second particles ranges from 0.93 to 1.12. Specifically, the ratio of the ID/IG value of the first particles to the ID/IG value of the second particles may be 0.93, 0.94, 0.95, 0.96, 0.97, 0.98, 0.99, 1.0, 1.01, 1.02, 1.03, 1.04, 1.05, 1.06, 1.07, 1.08, 1.09, 1.10, 1.11, 1.12, or a range defined by any two of these values. In some embodiments of this application, ID is a peak area of peak D in a Raman spectrum of the negative electrode active material, and IG is a peak area of peak G in the Raman spectrum of the negative electrode active material. Controlling the ID/IG value of the first particles and the ID/IG value of the second particles of the negative electrode active material provided by this application within the above ranges enables the negative electrode active material provided to have an appropriate degree of defects, which can promote ion adsorption and binding while reducing irreversible capacity loss due to a high degree of defects, thereby facilitating an increase in the gram capacity of the negative electrode active material.

In some embodiments of this application, in the negative electrode active material provided, the ID/IG of the first particles ranges from 1.0 to 1.3. Specifically, the ID/IG of the first particles may be 1.0, 1.01, 1.02, 1.03, 1.04, 1.05, 1.06, 1.07, 1.08, 1.09, 1.1, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.3, or a range defined by any two of these values. In some embodiments of this application, regulating the ID/IG of the first particles within the above ranges enables the negative electrode active material provided to have an appropriate degree of defects, which can promote ion adsorption and binding while reducing irreversible capacity loss due to a high degree of defects, thereby facilitating an increase in the gram capacity of the negative electrode active material.

In some embodiments of this application, in the negative electrode active material provided, the ID/IG of the second particles ranges from 1.1 to 1.3. Specifically, the ID/IG of the second particles may be 1.0, 1.01, 1.02, 1.03, 1.04, 1.05, 1.06, 1.07, 1.08, 1.09, 1.1, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.3, or a range defined by any two of these values. In some embodiments of this application, regulating the ID/IG of the second particles within the above ranges enables the negative electrode active material provided to have an appropriate degree of defects, which can promote ion adsorption and binding while reducing irreversible capacity loss due to a high degree of defects, thereby facilitating an increase in the gram capacity of the negative electrode active material.

In some embodiments of this application, in the negative electrode active material provided, a strength of the first particles and a strength of the second particles are tested using a nanoindentation method, and a particle strength ratio of the first particles to the second particles ranges from 1.1 to 2.8. Specifically, the particle strength ratio of the first particles to the second particles may be 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, or a range defined by any two of these values. In some embodiments of this application, regulating the particle strength ratio of the first particles to the second particles in the negative electrode active material provided by this application within the above ranges can ensure that the particle morphology of the negative electrode plate is maintained during cold pressing, thereby improving the initial Coulombic efficiency of the negative electrode active material and improving the cycling performance of the secondary battery.

In some embodiments of this application, in the negative electrode active material provided, the strength of the first particles tested using a nanoindentation method ranges from 0.1 GPa to 6 GPa. In some embodiments of this application, regulating the strength of the first particles tested using a nanoindentation method within the above range can ensure that the particle morphology of the negative electrode plate is maintained during cold pressing and avoid crushing and breakage, thereby improving the initial Coulombic efficiency of the negative electrode active material and improving the cycling performance of the secondary battery.

In some embodiments of this application, in the negative electrode active material provided, the strength of the second particles tested using a nanoindentation method ranges from 0.1 GPa to 6 GPa. In some embodiments of this application, regulating the strength of the second particles tested using a nanoindentation method within the above range can ensure that the particle morphology of the negative electrode plate is maintained during cold pressing and avoid crushing and breakage, thereby improving the initial Coulombic efficiency of the negative electrode active material and improving the cycling performance of the secondary battery.

According to a second aspect of this application, a negative electrode plate is further provided, where the negative electrode plate includes a negative electrode current collector and a negative electrode active material layer disposed on at least one surface of the negative electrode current collector. The negative electrode active material layer includes any negative electrode active material according to the first aspect of this application. The negative electrode plate provided by the second aspect of this application has a high capacity, and applying it to a secondary battery can increase the energy density of the secondary battery while improving the cycling performance of the secondary battery.

There is no particular limitation on the negative electrode current collector in this application, as long as the purpose of this application can be achieved. For example, the negative electrode current collector may include copper foil, copper alloy foil, nickel foil, stainless steel foil, titanium foil, foamed nickel, foamed copper, or a polymer substrate coated with conductive metal.

The negative electrode active material layer of this application may further include a conductive agent and a binder. There is no particular limitation on the above conductive agent and binder in this application, as long as the purpose of this application can be achieved. For example, the conductive agent may include, but is not limited to, carbon materials, metals, or conductive polymers. The binder may include, but is not limited to, at least one of polypropylene glycol, sodium polyacrylate, potassium polyacrylate, lithium polyacrylate, polyimide, polyamide-imide, hydroxypropyl cellulose, carboxymethyl cellulose (CMC), or sodium carboxymethyl cellulose (CMC-Na).

In some embodiments of this application, the compacted density of the negative electrode active material layer ranges from 0.90 g/cc to 1.3 g/cc; or, the compacted density of the negative electrode active material layer ranges from 0.95 g/cc to 1.25 g/cc.

In some embodiments of this application, the negative electrode plate is used as a working electrode and lithium metal is used as a counter electrode to form a half-battery through assembly. A charge-discharge test is performed in a range of 0 V to 2.5 V vs Li⁺/Li. Based on a charge-discharge curve obtained from a charge-discharge test, a total gram capacity at 0 V to 0.20 V (vs Li⁺/Li) is denoted as C10 mAh/g, a gram capacity at 0 V to 0.20 V (vs Li⁺/Li) is denoted as C11 mAh/g, and a gram capacity at 0.2 V to 2.5 V (vs Li⁺/Li) is denoted as C12 mAh/g, where the negative electrode active material satisfies: 600 ≤ C10 ≤ 850, and 300 ≤ C11 ≤ 590; and/or, 0.4 ≤ C12/C11 ≤ 1.2.

In some embodiments of this application, in the negative electrode plate provided, the compacted density of the negative electrode active material layer ranges from 0.90 g/cc to 1.3 g/cc. Specifically, the compacted density of the negative electrode active material layer may be 0.90 g/cc, 0.91 g/cc, 0.92 g/cc, 0.93 g/cc, 0.94 g/cc, 0.95 g/cc, 0.96 g/cc, 0.97 g/cc, 0.98 g/cc, 0.99 g/cc, 1.0 g/cc, 1.11 g/cc, 1.12 g/cc, 1.13 g/cc, 1.14 g/cc, 1.15 g/cc, 1.16 g/cc, 1.17 g/cc, 1.18 g/cc, 1.19 g/cc, 1.20 g/cc, 1.21 g/cc, 1.22 g/cc, 1.23 g/cc, 1.24 g/cc, 1.25 g/cc, 1.26 g/cc, 1.27 g/cc, 1.28 g/cc, 1.29 g/cc, 1.3 g/cc, or a range defined by any two of these values. Preferably, the compacted density of the negative electrode active material layer may range from 0.9 g/cc to 1.25 g/cc. In some embodiments of this application, by regulating the compacted density of the negative electrode active material layer within the above range, a percentage of the negative electrode active material per unit area can be increased, thereby increasing the energy density of the secondary battery.

In some embodiments of this application, in the negative electrode plate provided, the negative electrode plate is used as a working electrode and lithium metal is used as a counter electrode to form a half-battery through assembly. A charge-discharge test is performed in a range of 0 V to 2.5 V vs Li⁺/Li. Based on a charge-discharge curve obtained from a charge-discharge test, a total gram capacity at 0 V to 0.20 V (vs Li⁺/Li) is denoted as C10 mAh/g, a gram capacity at 0 V to 0.20 V (vs Li⁺/Li) is denoted as C11 mAh/g, and a gram capacity at 0.2 V to 2.5 V (vs Li⁺/Li) is denoted as C12 mAh/g, where the negative electrode active material satisfies: 600 ≤ C10 ≤ 850, and 300 ≤ C11 ≤ 590; and/or, 0.4 ≤ C12/C11 ≤ 1.2. Specifically, C10 may be 600 mAh/g, 610 mAh/g, 620 mAh/g, 630 mAh/g, 640 mAh/g, 650 mAh/g, 660 mAh/g, 670 mAh/g, 680 mAh/g, 690 mAh/g, 700 mAh/g, 710 mAh/g, 720 mAh/g, 730 mAh/g, 740 mAh/g, 750 mAh/g, 760 mAh/g, 770 mAh/g, 780 mAh/g, 790 mAh/g, 800 mAh/g, 810 mAh/g, 820 mAh/g, 830 mAh/g, 840 mAh/g, 850 mAh/g, or a range defined by any two of these values. Specifically, C11 may be 300 mAh/g, 310 mAh/g, 320 mAh/g, 330 mAh/g, 340 mAh/g, 350 mAh/g, 360 mAh/g, 370 mAh/g, 380 mAh/g, 390 mAh/g, 400 mAh/g, 410 mAh/g, 420 mAh/g, 430 mAh/g, 440 mAh/g, 450 mAh/g, 460 mAh/g, 470 mAh/g, 480 mAh/g, 490 mAh/g, 500 mAh/g, 510 mAh/g, 520 mAh/g, 530 mAh/g, 540 mAh/g, 550 mAh/g, 560 mAh/g, 570 mAh/g, 580 mAh/g, 590 mAh/g, or a range defined by any two of these values. Specifically, C12/C11 may be 0.4, 0.5, 0.6, 0.7, 0.8, 0.9, 1.0, 1.1, 1.2, or a range defined by any two of these values. By regulating the corresponding C10, C11, and C12 of the negative electrode active material within the above ranges, the negative electrode active material layer can have a high total lithium storage gram capacity and a low average lithium deintercalation potential. Using the negative electrode active material layer with the above characteristics as a negative electrode of a lithium-ion battery is conducive to further increasing the energy density of the lithium-ion battery.

According to a third aspect of this application, a secondary battery is provided, including the negative electrode plate provided by any one of the embodiments according to the second aspect of this application. The secondary battery including the above negative electrode plate has high energy density and good cycling performance.

The secondary battery of this application further includes a positive electrode plate. There is no particular limitation on the positive electrode plate in this application, as long as the purpose of this application can be achieved. For example, the positive electrode plate includes a positive electrode current collector and a positive electrode active material layer disposed on at least one surface of the positive electrode current collector. For example, the positive electrode current collector may include a metal foil or a composite current collector. For example, the metal foil may be an aluminum foil. In some embodiments, the secondary battery is a lithium-ion battery, and the positive electrode active material may include a lithium transition metal oxide, and the lithium transition metal oxide may include, but is not limited to, at least one of lithium iron phosphate, a lithium-rich manganese-based material, lithium cobalt oxide (LiCoO₂), lithium manganese iron phosphate, or lithium titanate.

There is no particular limitation on thicknesses of the positive electrode current collector and the positive electrode active material layer in this application, as long as the purpose of this application can be achieved. For example, the thickness of the positive electrode current collector is 5 µm to 20 µm, preferably 6 µm to 18 µm.

The secondary battery of this application further includes an electrolyte. In one embodiment, the electrolyte includes a lithium salt and a non-aqueous solvent. There is no particular limitation on a concentration of the lithium salt in the electrolyte in this application, as long as the purpose of this application can be achieved.

The secondary battery of this application further includes a separator for separating the positive electrode plate from the negative electrode plate, preventing internal short circuits in the secondary battery and allowing electrolyte ions to pass freely, without affecting the proceeding of the electrochemical charge-discharge process. There is no particular limitation on the separator in this application, as long as the purpose of this application can be achieved. For example, a material of the separator may include, but is not limited to, at least one of polyethylene (PE), polypropylene (PP), a polytetrafluoroethylene-based polyolefin (PO) separator, a polyester film (such as a polyethylene terephthalate (PET) film), a cellulose film, a polyimide film (PI), polyamide films (PA), spandex, or an aramid film.

The secondary battery of this application further includes a packaging bag for accommodating the positive electrode plate, the separator, the negative electrode plate, the electrolyte, and other components known in the art in the secondary battery, with no limitation on these other components in this application. There is no particular limitation on the packaging bag in this application, and it may be a packaging bag known in the art, as long as the purpose of this application can be achieved. For example, an aluminum-plastic film packaging bag may be used.

There is no particular limitation on the secondary battery of this application, and it may include any apparatus in which electrochemical reactions take place. In one embodiment of this application, the secondary battery may include, but is not limited to, lithium-ion batteries, sodium-ion batteries, lithium polymer secondary batteries, or lithium-ion polymer secondary batteries.

According to a fourth aspect of this application, an electronic apparatus is provided, including the secondary battery provided by any one of the embodiments according to the third aspect of this application. The electronic apparatus including the above secondary battery has a long service life.

There is no particular limitation on the electronic apparatus of this application, and it may be any electronic apparatus known in the prior art. In some embodiments, the electronic apparatus may include, but is not limited to, notebook computers, pen-input computers, mobile computers, e-book readers, portable phones, portable fax machines, portable copiers, portable printers, head-mounted stereo headphones, video recorders, liquid crystal display televisions, portable cleaners, portable CD players, mini-disc players, transceivers, electronic notebooks, calculators, memory cards, portable recorders, radios, backup power supplies, motors, cars, motorcycles, electric bicycles, bicycles, lighting fixtures, toys, gaming consoles, clocks, electric tools, flashlights, cameras, large household storage batteries, or lithium-ion capacitors.

### Examples

The following provides examples and comparative examples to more specifically illustrate the embodiments of this application. Various tests and evaluations were conducted according to the methods described below. Unless otherwise specified, "parts" and "%" are based on mass.

The test methods used in the following examples and comparative examples are as follows.

### 1. Sphericity test of particles

Before testing, the particles in the negative electrode active material are sieved first according to particle sizes, and the sphericity of the corresponding particles is further tested after the particles in the negative electrode active material are sieved according to the particle sizes. In the sphericity test of the particles, a laser particle size analyzer (model BT-2900) is used to analyze the sphericity of solid powder, based on the GB/T38887-2020 analysis method. An electromagnetic vibration feeding and free-fall dispersion technology is used for dispersing the solid powder, and the sphericity of the particles is outputted via image processing software that incorporates a high-speed CCD and a multi-threaded edge recognition technology.

### 2. Particle size test of particles

A Malvern particle size analyzer is used to test a particle size of a powder material: the powder material is dispersed in an ethanol dispersant and ultrasonicated for 30 minutes, and then the sample is added to the Malvern particle size analyzer to test the Dᵥ50 of the powder material.

### 3. Metal element analysis test

A microwave digestion system (model CEM-Mars5) is used to digest the sample, and an ICP-OES instrument (model PE7000DV) is used to quantitatively test element content. After the sample is digested into a solution with acid, the liquid sample is put into an atomization chamber to form an aerosol under the action of a carrier gas, and the aerosol is injected into plasma via a central injection tube and is fully evaporated, dissociated, atomized, ionized, and excited, to emit characteristic spectral lines of the elements. Qualitative analysis is performed based on the wavelength of the spectral lines, and quantitative analysis is performed based on that the intensity of the spectral lines is proportional to the concentration.

### 4. Non-metal element analysis test

An X-ray photoelectron spectroscopy (model ThermoESCALAB250XI) is used to test proportions and percentages of C and N elements in the active material. Three different locations on the same material are selected to respectively test the percentages of the above elements as well as calculate their mass percentages.

### 5. Scanning electron microscopy (SEM) test of negative electrode active material

A scanning electron microscope (model ZEISSSEM) is used to observe the negative electrode active material particles and take SEM images. For cross-sectional testing, and an ion polisher (model IB-09010CP) is used to obtain a flat cross section through cutting, followed by SEM imaging. The ion polishing principle involves ionizing argon in vacuum, followed by accelerating and focusing, and then high-speed argon ions knock out atoms or molecules from the sample surface to implement ion polishing.

### 6. Small-angle X-ray scattering test

A small-angle X-ray scattering structure analyzer (model Nano-inXider) is used to test the variation of a scattering vector of the sample in a scattering intensity range of 0.01 nm⁻¹ to 0.7 nm⁻¹, and the closed-pore volume of the negative electrode active material particles is analyzed through fitting.

### 7. Raman test

A Raman spectrometer is used to test the Raman spectra of a first particle material and a second particle material. During the test, more than 200 points are tested at equal intervals within a range of 200 µm × 500 µm, with the test range of each point being between 1000 cm⁻¹ and 2000 cm⁻¹. A peak appearing between 1320 cm⁻¹ and 1370 cm⁻¹ is recorded as peak D, and a peak appearing between 1570 cm⁻¹ and 1620 cm⁻¹ is recorded as peak G. An intensity ratio of ID/IG for each point is calculated, and an average value of multiple points is calculated as a final ID/IG intensity ratio.

### 8. Particle strength test

A nanoindenter (model Hysitron TI 950) is used to test the hardness and elastic modulus of individual particles of a porous material, with the test standard being JB/T 12721-2016. Before testing, powder is dispersed in epoxy resin and cured, and the cured resin is cut through ion polishing. A nano-probe is used to apply pressure to the individual particles and monitor an indentation depth on the particle surface, thereby calculating the particle strength. The strengths of five particles in the same sample are tested in parallel to obtain an average value.

### 9. Compacted density test of negative electrode active material layer

A fully discharged lithium-ion battery is taken, and disassembled to obtain the negative electrode plate, and the negative electrode plate is cleaned and dried. An electronic balance is used to weigh the negative electrode plate with an area of S, with the weight being recorded as W₁, and a micrometer is used to measure the thickness T₁ of the negative electrode plate. The negative electrode active material layer is washed off using a DMC solvent and dried; the weight of the negative electrode current collector is measured and recorded as W₂, and the thickness T₂ of the negative electrode current collector is measured using a micrometer. The weight W₀ and thickness Tₒ of the negative electrode active material layer on one side of the negative electrode current collector, as well as the compacted density of the negative electrode active material layer, are calculated according to the following formulas: W₀ = W₁ - W₂, T₀ = T₁ - T₂, and compacted density = W₀ / (T₀ × S).

10. Total lithium storage gram capacity and initial efficiency test of negative electrode active material:

The initial reversible gram capacity of the negative electrode active material from 0 V to 2.5 V can be obtained using the following test method: A negative electrode plate with one side coated is taken and cut into a disc with a diameter of 14 mm as a working electrode, a lithium sheet is used as a counter electrode, a porous polyethylene film (provided by Celgard) is used as the separator, and an electrolyte is injected to form a button battery through assembly. The button battery is discharged to 0 V in three stages at small currents of 0.05C/0.01C/0.005C, and then the initial discharge capacity of the button battery is recorded. Then, the button battery is charged at a constant current of 0.1C to 2.5 V, and the initial charge capacity of the button battery is recorded. Initial efficiency = initial charge capacity / initial discharge capacity × 100%. The initial reversible gram capacity of the negative electrode active material in a potential range of 0 V to 2.5 V vs Li/Li⁺, that is, the total lithium storage gram capacity (total reversible capacity) C10 is equal to initial charge capacity / mass of the negative electrode active material, which is measured in mAh/g; the gram capacity of the negative electrode active material in a potential range of 0 V to 0.2 V vs Li/Li⁺ is recorded as C11; and the gram capacity of the negative electrode active material in a potential range of 0.2 V to 2.5 V vs Li/Li⁺ is recorded as C12.

The above electrolyte includes a base solvent and a lithium salt, where the base solvent is obtained by mixing ethylene carbonate (EC) and diethyl carbonate (DEC) at a mass ratio of 1:1, the lithium salt is LiPF₆, and a concentration of the lithium salt is 1 mol/L.

The total lithium storage gram capacity and initial efficiency tests in the comparative examples are the same as the test method for the total lithium storage gram capacity and initial efficiency of the negative electrode active material described above.

### 11. Energy density (ED) Test

In a 25°C environment, a lithium-ion battery is charged at a constant current of 0.2C to a voltage of 4.48 V or 3.95 V, then charged at a constant voltage, and discharged at a constant current of 0.2C to a voltage of 2 V. This is recorded as one cycle, and a discharge capacity C and discharge energy E of the first cycle are recorded. The length, width, and height of the battery at 50% state of charge are measured to obtain a battery volume Vₘ. Average discharge voltage U = E / C; and energy density ED = E / Vₘ.

### Example 1-1

### <Preparation of negative electrode active material>

(1) Pre-polymerization: 1386 g of phenol and 1024 g of hexamethylenetetramine were weighed and dispersed in 32 L aqueous solution. The mixture solution was placed in a 50 L glass reactor, and stirred at room temperature for 2 h at a rotating speed of 300 rpm. Subsequently, the mixture solution was heated at a temperature rise rate of 5°C/min to a pre-polymerization temperature of 95°C, reacted for 24 h, and cooled to obtain a pre-polymerized resin solution.
(2) Spray drying + curing: The prepared pre-polymerized resin solution was dried through spray drying, with an inlet air temperature controlled at 200°C, an outlet air temperature controlled at 100°C, and a feed rate controlled at 5 L/min. After spraying, a powder product was collected. The powder product was placed in a temperature-programmed oven under an inert atmosphere, with a heating program set to 90°C/1h + 110°C/1h + 130°C/1h + 150°C/1h to ensure complete resin curing, to obtain a cured powder product.
(3) Carbonization: 1000 g of the cured powder product and 100 g of LiOH were weighed and uniformly mixed using a mixer. The uniformly mixed precursor was placed in a rotary furnace with an inner container, heated at a temperature rise rate of 5°C/min to a primary calcination temperature T₁ of 900°C, carbonized for 2 h, and cooled to obtain a carbonized material.
(4) Washing: The obtained carbonized powder material was washed with 1 M hydrochloric acid for 12 h, and filtered, and a filter residue was washed with deionized water for 12 h, filtered, and dried to obtain dried powder.
(5) Carbon coating: The washed and dried powder was transferred to a nitrogen atmosphere protection furnace, heated at a temperature rise rate of 5°C/min to a chemical vapor deposition temperature T₃ of 900°C, then a gas atmosphere was replaced with a mixture gas of reducing gas acetylene and argon, with a chemical vapor deposition time t₃ of 2 h. After the chemical vapor deposition, the mixture gas was stopped, replaced with nitrogen, and cooled to room temperature to obtain a hard carbon material, which was the negative electrode active material; where, based on a mass of the mixture gas, a mass percentage of the reducing gas acetylene was 20%.

### <Preparation of negative electrode plate>

The prepared negative electrode active material was mixed with a binder styrene-butadiene rubber and a thickener sodium carboxymethyl cellulose at a mass ratio of 97:1.5:1.5, then deionized water was added as a solvent to prepare a negative electrode slurry with a solid content of 40wt%, and the negative electrode slurry was stirred uniformly. The uniformly stirred negative electrode slurry was uniformly applied onto one surface of a 6 µm thick negative electrode current collector copper foil, and the copper foil was dried at 85°C for 4 h to obtain a negative electrode plate having one surface coated with a negative electrode active material layer with a coating thickness of 50 µm. After cold pressing, cutting, and slitting, the negative electrode plate was dried in vacuum at 120°C for 12 h to obtain a negative electrode plate with specifications of 76.6 mm × 875 mm.

### <Preparation of positive electrode plate>

A positive electrode active material lithium cobalt oxide, a conductive agent conductive carbon black (Super P), and a binder PVDF were mixed at a mass ratio of 97:1.4:1.6, N-methylpyrrolidone (NMP) was added as a solvent, and the resulting mixture was stirred uniformly to prepare a positive electrode slurry with a solid content of 72wt%. The positive electrode slurry was uniformly applied onto one surface of a 13 µm thick positive electrode current collector aluminum foil, and the aluminum foil was dried at 85°C to obtain a positive electrode plate having one surface coated with a positive electrode active material layer with a coating thickness of 80µm. After cold pressing, cutting, and slitting, the positive electrode plate was dried in vacuum at 85°C for 4 h to obtain a positive electrode plate with specifications of 74 mm × 867 mm.

### <Preparation of electrolyte>

In a dry argon atmosphere glove box, base solvents ethylene carbonate (EC), propylene carbonate (PC), and diethyl carbonate (DEC) were mixed at a mass ratio of EC:PC:DEC = 1:1:1, then 1,3-propane sultone, fluoroethylene carbonate, and succinonitrile were added, dissolved, thoroughly stirred, added with a lithium salt LiPF₆, and mixed uniformly to obtain an electrolyte, where a concentration of the lithium salt was 1 mol/L, and based on a mass of the base solvents, mass percentages of the 1,3-propane sultone, fluoroethylene carbonate, and succinonitrile were all 2%.

### <Preparation of separator>

A 7 µm thick polyethylene film was used as the separator.

### <Preparation of lithium-ion battery>

The positive electrode plate, separator, and negative electrode plate prepared above were sequentially stacked, with the separator placed between the positive electrode plate and the negative electrode plate to provide isolation, and then wound to obtain an electrode assembly. After tab welding, the electrode assembly was placed in an aluminum-plastic film packaging bag, dried in a vacuum oven at 80°C for 12 h to remove moisture, and the prepared electrolyte was injected, followed by processes such as vacuum sealing, standing, formation, degassing, and shaping to obtain a lithium-ion battery.

### Examples 1-2 to 1-11 and Examples 2-1 to 2-8

Except that the preparation parameters were adjusted according to Table a, the remaining preparation steps and parameters for Examples 1-2 to 1-11 and Examples 2-1 to 2-8 were the same as those in Example 1-1.

### Comparative Example 1

A Coconut shell was used to replace the precursor used in the <Preparation of negative electrode active material> step of Example 1-1. Specifically, in step (3) of the <Preparation of negative electrode active material> of Example 1-1, a coconut shell was used as a precursor, to be specific, 1000 g of coconut shell was directly weighed and placed in a rotary furnace with an inner container, heated at a temperature rise rate of 5°C/min to a primary calcination temperature T1 of 900°C, carbonized for 2 h, and cooled to obtain a carbonized material, followed by subsequent steps. The subsequent steps were the same as those in Example 1-1.

### Comparative Example 2

Asphalt was used to replace the precursor used in the <Preparation of negative electrode active material> step of Example 1-1. Specifically, in step (3) of the <Preparation of negative electrode active material> of Example 1-1, asphalt was used as a precursor, to be specific, 1000 g of asphalt was directly weighed and placed in a rotary furnace with an inner container, heated at a temperature rise rate of 5°C/min to a primary calcination temperature T1 of 900°C, carbonized for 2 h, and cooled to obtain a carbonized material, followed by subsequent steps. The subsequent steps were the same as those in Example 1-1.

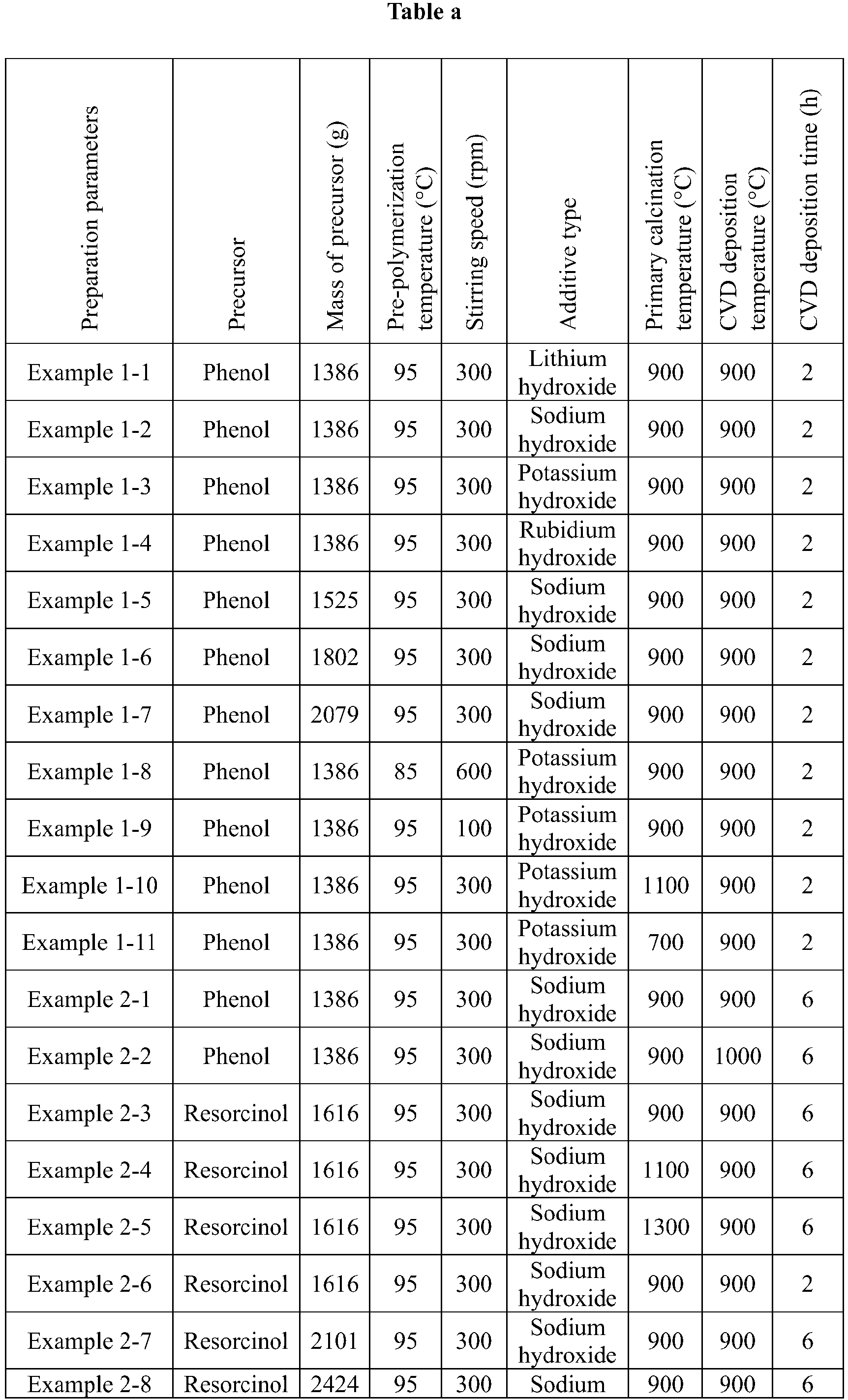

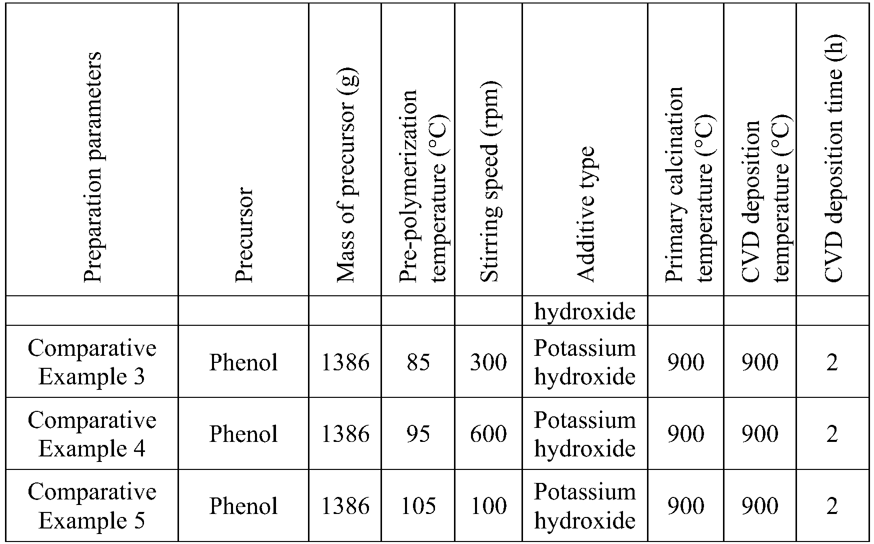

### Effect Example 1

The negative electrode active materials prepared in Examples 1-1 to 1-11 and Comparative Examples 1 to 5 were further tested using the above test methods for parameters such as the sphericity of the first particles, the particle size of the first particles, the sphericity of the second particles, the particle size of the second particles, the type of the first element, the mass percentage A1 of the first element in the first particles, the mass percentage A2 of the first element in the second particles, the type of the second element, the mass percentage B1 of the second element in the first particles, the mass percentage B2 of the second element in the second particles, A2/A1, B2/B1, and the compacted density of the negative electrode active material layer including the above negative electrode active material, as well as related performance parameters such as the corresponding total reversible capacity (mAh/g), energy density ED (Wh/L), and cycling retention rate (after 500 cycles) of the negative electrode active material in each example. The results are shown in Table 1.

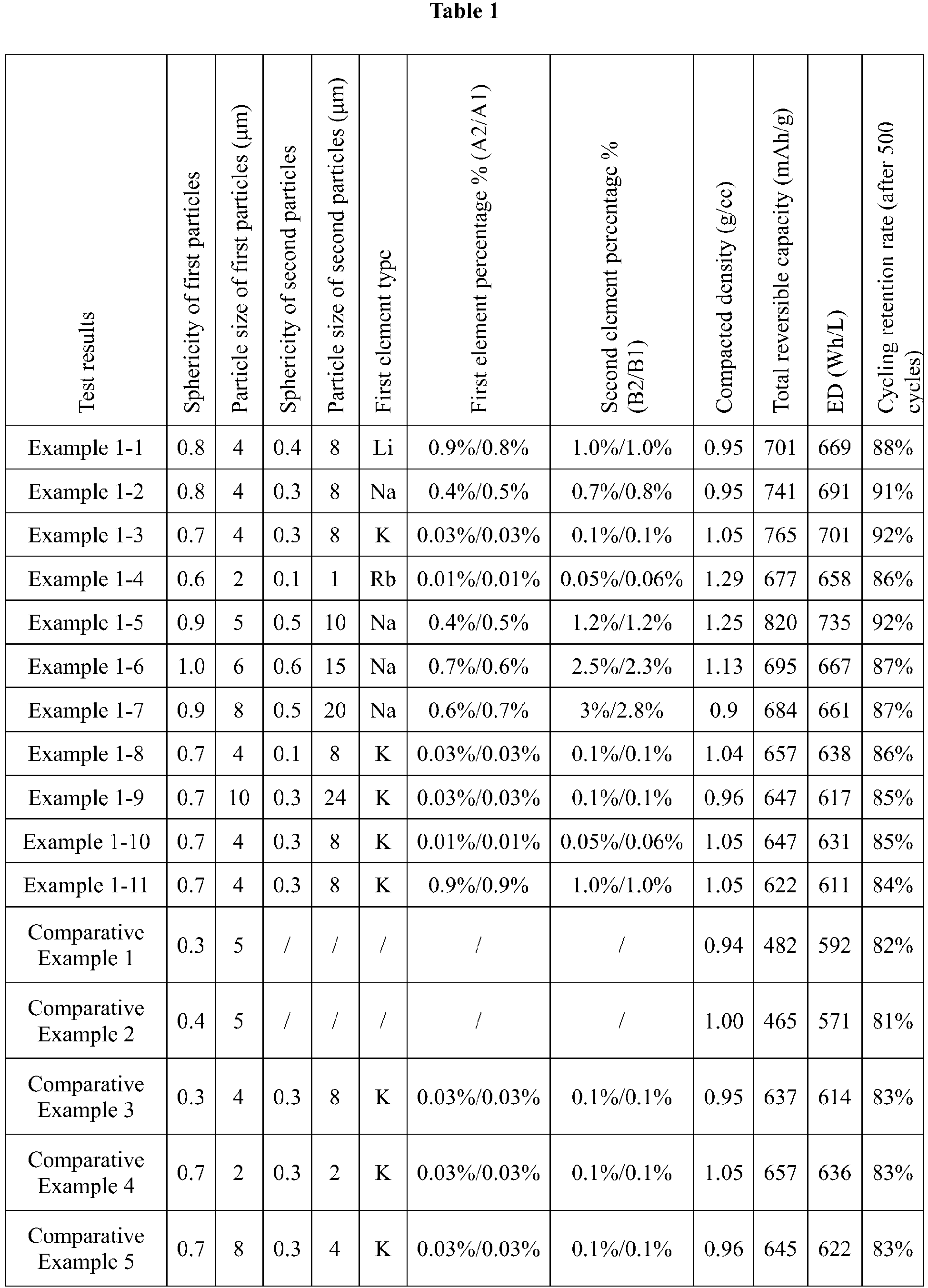

From the results presented in Table 1, it can be seen that the negative electrode active material provided by this application has higher gram capacity and reversible capacity. Lithium-ion batteries including the negative electrode active material of this application have higher energy density and higher cycling retention rate, indicating that the lithium-ion batteries provided by this application have higher energy density and better cycling performance. In combination with the data presented in the above examples, it can be seen that the negative electrode active material provided by this application has higher gram capacity and reversible capacity. Lithium-ion batteries including the negative electrode active material of this application have higher energy density and higher cycling retention rate, indicating that the lithium-ion batteries provided by this application have higher energy density and better cycling performance.

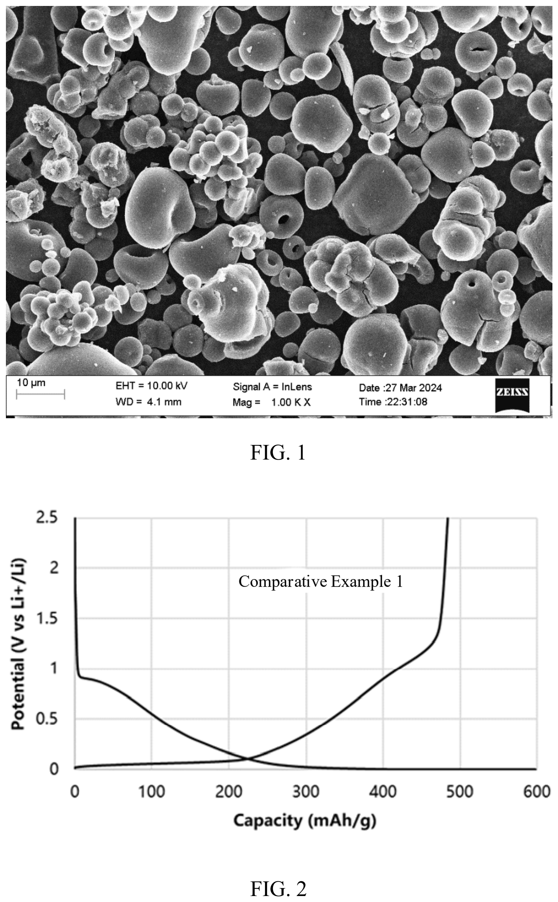

In addition, a scanning electron microscope image of the negative electrode active material of Example 1-5 is shown in FIG. 1. According to the results shown in FIG. 1, the negative electrode active material is granular and includes two types of particles. The particles with a smaller particle size have higher sphericity, and the particles with a larger particle size have lower sphericity. In the negative electrode active material of Example 1-5, the sphericity of the first particles is 0.9, the sphericity of the second particles is 0.5, the particle size Dᵥ50 of the first particles is 5 µm, and the particle size Dᵥ50 of the second particles is 12 µm. That is, the sphericity of the first particles is higher than that of the second particles, and the particle size of the first particles is lower than that of the second particles. The negative electrode active material with the above particle morphology allows for good bonding between the first particles and the second particles, avoiding the issue of poor adhesion due to point contact between negative electrode active material particles when only the first particles are present. In addition, in the negative electrode active material provided by this application, the first particles are uniformly distributed among the second particles. The first particles, with higher sphericity and smaller particle size, can slide during cold pressing of an electrode plate, relieving cold-pressing stress and avoiding hard contact between particles, thereby preventing stress concentration. This effectively addresses the issue of breakage of large particles during cold pressing, avoids exposing more new surfaces of the negative electrode material after cold pressing, further prevents electrolyte loss, increases the energy density and improves cycling performance of the battery cell. Additionally, the compacted density of the negative electrode plate including the above negative electrode active material is significantly increased, and the negative electrode binder can better encapsulate the first particles. The contact area between the cut surface of the first particle and the irregular surface of the second particle is larger, which can effectively promote lithium-ion transport between negative electrode active material particles.

FIG. 2 shows a charge-discharge curve in a potential range of 0 V to 2.5 V vs Li/Li⁺ for a battery assembled with the negative electrode plate prepared in Comparative Example 1 as the working electrode and a lithium metal sheet as the counter electrode. As shown in FIG. 2, in the potential range of 0 V to 0.2 V vs Li/Li⁺, the gram capacity C11 of the negative electrode active material of Comparative Example 1 is 233 mAh/g; in the potential range of 0 V to 2.5 V vs Li/Li⁺, the gram capacity C10 of the negative electrode active material of Comparative Example 1 is 482 mAh/g; and in the potential range of 0.2 V to 2.5 V vs Li/Li⁺, the gram capacity C12 of the negative electrode active material of Comparative Example 1 is 249 mAh/g.

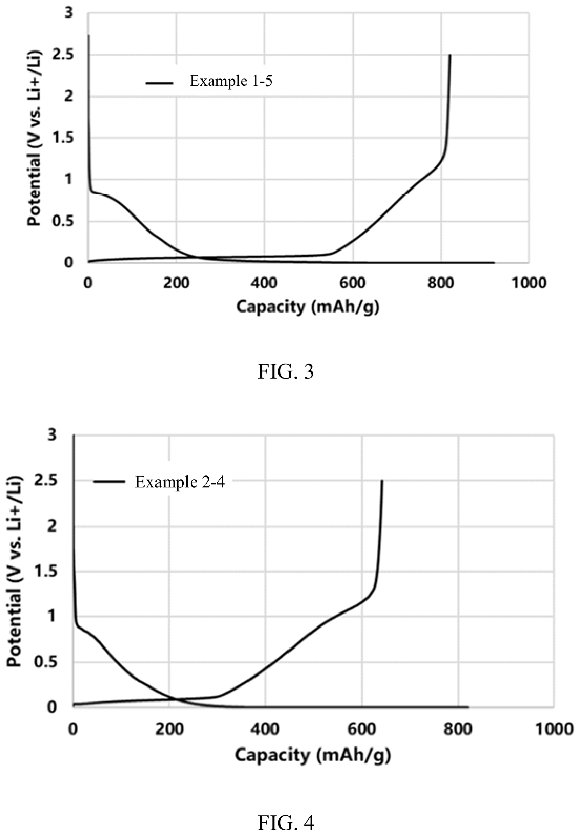

FIG. 3 shows a charge-discharge curve in a potential range of 0 V to 2.5 V vs Li/Li⁺ for a battery assembled with the negative electrode plate prepared in Example 1-5 as the working electrode and a lithium metal sheet as the counter electrode. As shown in FIG. 3, in the potential range of 0 V to 0.2 V vs Li/Li⁺, the gram capacity C11 of the negative electrode active material of Example 1-5 is 582 mAh/g; in the potential range of 0 V to 2.5 V vs Li/Li⁺, the gram capacity C10 of the negative electrode active material of Example 1-5 is 820 mAh/g; and in the potential range of 0.2 V to 2.5 V vs Li/Li⁺, the gram capacity C12 of the negative electrode active material of Example 1-5 is 238 mAh/g. As compared to Comparative Example 1, the negative electrode active material provided by the embodiments of this application has significantly higher gram capacity, and the negative electrode active material of Example 1-5 has a stable low-potential platform, exhibiting higher energy density when applied to a full battery.

### Effect Example 2

Based on the results presented in Table 1, the negative electrode active materials prepared in Examples 2-1 to 2-8 were further tested using the above test methods for parameters such as coating layer thickness, mass ratio of first particles to second particles, closed-pore volume of first particles (cc/g), closed-pore volume of second particles (cc/g), ID/IG of first particles, ID/IG of second particles, strength ratio of first particles to second particles, and strength of first particles (GPa), as well as related performance parameters such as the total reversible capacity (mAh/g), energy density ED (Wh/L), and cycling retention rate (after 500 cycles) of the negative electrode active material in each example. The examples in Table 2 (Examples 2-1 to 2-8) were based on Example 1-2, where the corresponding product parameters in Table 1 were kept essentially the same as those in Example 1-2, and only the corresponding product parameters in Table 2 were changed, and the changes in related performance corresponding to the examples in Table 2 were compared. The results are shown in Table 2.

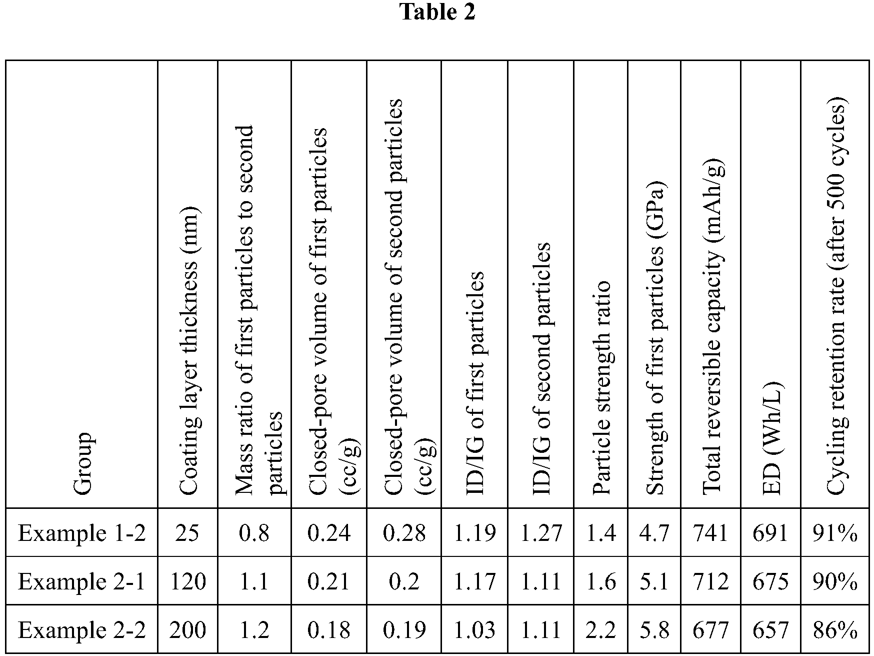

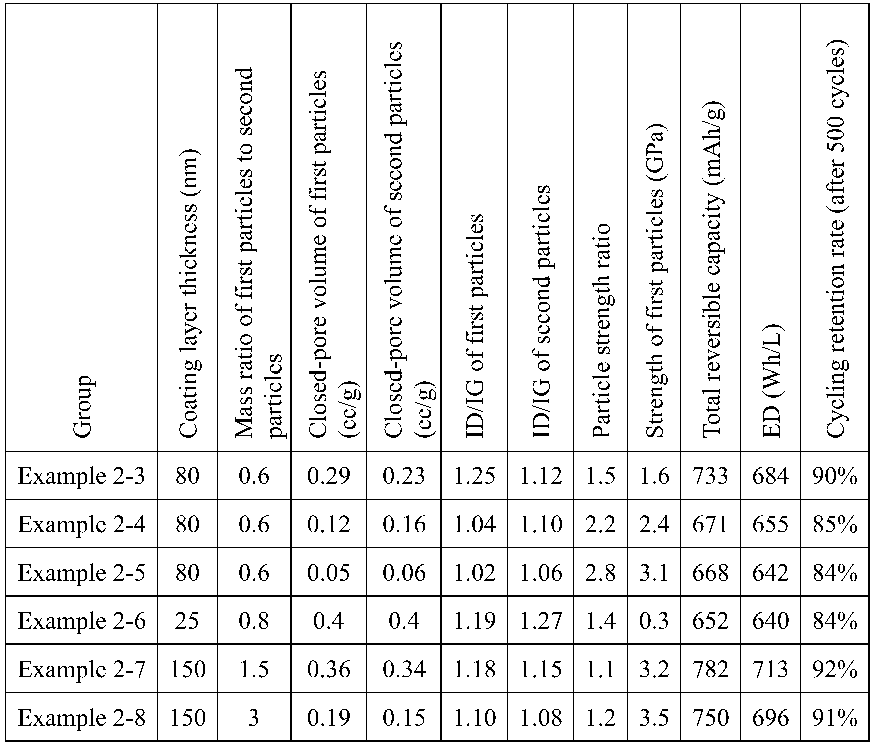

According to the results presented in Table 2, it is further indicated that the negative electrode active material provided by this application has higher gram capacity and reversible capacity. Lithium-ion batteries including the negative electrode active material of this application have higher energy density and higher cycling retention rate. When the parameters such as the coating layer thickness, the mass ratio of first particles to second particles, closed-pore volume of first particles (cc/g), closed-pore volume of second particles (cc/g), ID/IG of first particles, ID/IG of second particles, strength ratio of first particles to second particles, and strength of first particles are further adjusted based on the product parameters in Table 1, the performance such as the total reversible capacity (mAh/g), energy density ED (Wh/L), and cycling retention rate (after 500 cycles) of the negative electrode active material can be further improved.

In addition, FIG. 4 shows a charge-discharge curve in a potential range of 0 V to 2.5 V vs Li/Li⁺ for a battery assembled with the negative electrode plate prepared in Example 2-4 as the working electrode and a lithium metal sheet as the counter electrode. As shown in FIG. 4, in the potential range of 0 V to 0.2 V vs Li/Li⁺, the gram capacity C11 of the negative electrode active material of Example 2-4 is 334 mAh/g; in the potential range of 0 V to 2.5 V vs Li/Li⁺, the gram capacity C10 of the negative electrode active material of Example 2-4 is 641 mAh/g; and in the potential range of 0.2 V to 2.5 V vs Li/Li⁺, the gram capacity C12 of the negative electrode active material of Example 2-4 is 307 mAh/g. As compared to Comparative Example 1, the negative electrode active material provided by the embodiments of this application has a higher gram capacity, and the negative electrode active material of Example 2-4 has a stable low-potential platform, exhibiting a specific energy density when applied to a full battery.

It can be understood that this application is described through some embodiments, and those skilled in the art will appreciate that various changes or equivalent substitutions can be made to these features and embodiments without departing from the spirit and scope of this application. Additionally, under the instruction of this application, these features and embodiments can be modified to adapt to specific situations and materials without departing from the scope of this application. Therefore, this application is not limited by the specific embodiments disclosed herein, and all embodiments falling within the scope of the claims of this application are within the scope of protection of this application.

## Claims

1. A negative electrode active material, wherein the negative electrode active material is granular, and the negative electrode active material comprises first particles and second particles, a sphericity of the first particles is greater than a sphericity of the second particles, the sphericity of the first particles is 0.6 to 1.0, and a particle size Dᵥ50 of the first particles is smaller than a particle size Dᵥ50 of the second particles.

2. The negative electrode active material according to claim 1, wherein the negative electrode active material satisfies at least one of the following conditions (1) to (5):
(1) the sphericity of the first particles is 0.7 to 1.0;
(2) the sphericity of the second particles is 0.1 to 0.6;;
(3) a ratio of the sphericity of the first particles to the sphericity of the second particles ranges from 1.1 to 10.0;
(4) the first particles comprise a hard carbon material; or
(5) the second particles comprise a hard carbon material.

3. The negative electrode active material according to claim 1 or 2, wherein the negative electrode active material satisfies at least one of the following conditions (1) to (3):
(1) a range of the particle size Dᵥ50 of the first particles satisfies 1 µm ≤ Dᵥ50 ≤ 10 µm;
(2) a range of the particle size of the second particles satisfies 1.5 µm ≤ Dᵥ50 ≤ 20 µm; or
(3) a ratio of the particle size Dᵥ50 of the first particles to the particle size Dᵥ50 of the second particles ranges from 0.05 to 0.9.

4. The negative electrode active material according to any one of claims 1 to 3, wherein the first particles and the second particles, both comprise a first element and a second element, the first element comprises any one of Li, Na, K, Rb, Mg, Ca, or Zn, and the second element is N element.

5. The negative electrode active material according to claim 4, wherein based on a total mass of the negative electrode active material, a percentage of the first element relative to the total mass of the negative electrode active material is 0.01% to 1%.

6. The negative electrode active material according to claim 4 or 5, wherein based on a total mass of the first particles, a percentage of the first element in the first particles is A1; and based on a total mass of the second particles, a percentage of the first element in the second particles is A2, wherein 0.8 ≤ A2/A1 ≤ 1.2.

7. The negative electrode active material according to claim 6, wherein A1 ranges from 0.01% to 0.9%; and/or, A2 ranges from 0.01% to 0.9%.

8. The negative electrode active material according to any one of claims 4 to 7, wherein based on a total mass of the negative electrode active material, a percentage of the second element relative to the total mass of the negative electrode active material is 0.01% to 3%.

9. The negative electrode active material according to any one of claims 4 to 8, wherein based on a total mass of the first particles, a percentage of the second element in the first particles is B1; and based on a total mass of the second particles, a percentage of the second element in the second particles is B2, wherein 0.8 ≤ B2/B1 ≤ 1.2.

10. The negative electrode active material according to claim 9, wherein B1 ranges from 0.06% to 2.8%; and/or, B2 ranges from 0.05% to 3%.

11. The negative electrode active material according to any one of claims 1 to 10, wherein the negative electrode active material satisfies at least one of the following conditions (1) to (3):
(1) a ratio of a closed-pore volume of the first particles to a closed-pore volume of the second particles is 0.75 to 1.0;
(2) the closed-pore volume of the first particles ranges from 0.05 cc/g to 0.4 cc/g; or
(3) the closed-pore volume of the second particles ranges from 0.06 cc/g to 0.4 cc/g.

12. The negative electrode active material according to any one of claims 1 to 11, wherein the negative electrode active material satisfies at least one of the following conditions (1) to (4):
(1) a surface of the first particles and a surface of the second particles have a carbon coating layer, wherein a thickness of the carbon coating layer is 20 nm to 200 nm;
(2) a mass ratio of the first particles to the second particles is 0.6 to 3.0;
(3) a ratio of an ID/IG value of the first particles to an ID/IG value of the second particles ranges from 0.93 to 1.12;
(4) a strength of the first particles and a strength of the second particles are tested using a nanoindentation method, wherein a ratio of the strength of the first particles to the strength of the second particles ranges from 1.1 to 2.8;
(5) a strength of the first particles ranges from 0.1 GPa to 6.0 GPa; or
(6) a strength of the second particles ranges from 0.1 GPa to 6.0 GPa.

13. A secondary battery, comprising a positive electrode plate, a negative electrode plate, and an electrolyte; wherein the negative electrode plate comprises a negative electrode current collector and a negative electrode active material layer disposed on at least one surface of the negative electrode current collector, and the negative electrode active material layer comprises the negative electrode active material according to any one of claims 1 to 12.

14. The secondary battery according to claim 13, wherein the negative electrode plate satisfies at least one of the following conditions (1) to (2):
(1) a compacted density of the negative electrode active material layer ranges from 0.90 g/cc to 1.3 g/cc; or
(2) the negative electrode plate is used as a working electrode and lithium metal is used as a counter electrode to form a half-battery through assembly; a charge-discharge test is performed in a range of 0 V to 2.5 V vs Li⁺/Li; based on a charge-discharge curve obtained from the charge-discharge test, a total gram capacity at 0 V to 0.20 V (vs Li⁺/Li) is denoted as C10 mAh/g, a gram capacity at 0 V to 0.20 V (vs Li⁺/Li) is denoted as C11 mAh/g, and a gram capacity at 0.2 V to 2.5 V (vs Li⁺/Li) is denoted as C12 mAh/g; wherein 600 ≤ C10 ≤ 850, 300 ≤ C11 ≤ 590 , and 0.4 ≤ C12/C11 ≤ 1.2.

15. An electronic apparatus, wherein the electronic apparatus comprises the secondary battery according to claim 13 or 14.
